# FASCICULE DE BREVET EUROPEEN

(11) **EP 0 603 057 B1**
(45) Date de publication et mention de la délivrance du brevet: **27.10.1999**
(21) Numéro de dépôt: 93403017.2
(22) Date de dépôt: 13.12.1993
(51) Int. Cl.: G01F 1/704, G01F 1/74

(54) **Procédé et dispositif pour le contrôle d'un flux de particules dans un conduit**
Verfahren und Vorrichtung zur Kontrolle der Strömung von Teilchen in einer Leitung
Method and device for controlling the flux of particles in a conduit

(30) Priorité: 15.12.1992 FR 9215114
(43) Date de publication de la demande: 22.06.1994
(73) Titulaire: INSTITUT FRANCAIS DU PETROLE, 92502 Rueil-Malmaison (FR)
(72) Inventeur: Buisson, André, F-69160 Tassin La Demi Lune (FR); Gille, Damien, F-38200 Vienne (FR); Beauducel, Claude, F-60119 Henonville (FR)

(56) Documents cités:
- AT-B- 388 810
- FR-A- 2 530 015
- SOVIET INVENTIONS ILLUSTRATED Section EI, Week 8417, 6 Juin 1984 Derwent Publications Ltd., London, GB; Class S, AN 84-106437 & SU-A-1 030 655 (SMIRNOV A. I.)

## Description

La présente invention a pour objet un procédé et un dispositif pour déterminer des caractéristiques de particules en déplacement dans un conduit. Le procédé selon l'invention convient particulièrement pour la mesure de la vitesse et/ou la section de particules ou granulés se déplaçant de façon continue ou discontinue dans une canalisation.

Dans toute la suite du texte, le conduit est un terme générique pour désigner tout type de tuyau, enceinte, récipient, réacteur etc où circulent des particules.

L'invention trouve des applications notamment dans le domaine du reformage regénératif où un catalyseur qui se présente sous la forme de granulés sensiblement de même diamètre, parcourt une chaine de réacteurs disposés verticalement. A la base de chacun d'eux, ils pénètrent dans un organe de transfert connu dans la technique sous le nom de "lift pot" où ils sont mélangés à un gaz sous pression généré au cours du processus et soufflés par un tube vers l'entrée supérieure du réacteur suivant. A la fin de cette chaîne, les granulés de catalyseurs sont conduits par un courant gazeux vers un régénérateur et, une fois régénérés, sont de nouveau déplacés le long de la chaine de réacteurs. Un tel processus de reformage régénératif est décrit par exemple dans le brevet US-A-4.172.027 déposé par le demandeur.

Durant ces cycles de reformage régénératif, on observe généralement une dégradation du catalyseur le long du circuit qu'il parcourt (phénomène dit "d'attrition"). Cela se traduit par des dépôts de poussières sur les grilles à l'intérieur des réacteurs et notamment une modification de la circulation des particules de catalyseur dans le conduit reliant la base de chaque réacteur à l'organe de transfert par soufflage. Comme ces organes ne fonctionnent bien que dans une marge étroite, le débit de gaz de soufflage devant être soigneusement proportionné au débit de particules à transférer, il est utile de contrôler la bonne circulation des granulés en mesurant par exemple leur vitcsse de déplacement.

La mesure de paramètres relatifs à la circulation de particules dans un conduit peut être effectuée suivant plusieurs techniques différentes.

Une technique de type acoustique pour mesurer la vitesse de déplacement de particules solides dans un courant de fluide, est utilisée dans l'industrie charbonnière. Elle consiste à disposer deux couples d'émetteurs-récepteurs d'ultra-sons à deux emplacements différents le long d'une conduite et à corréler les signaux reçus respectivement par les récepteurs en réponse à des impulsions émises par les émetteurs correspondants. Un exemple d'application de cette technique est décrite par exemple dans le brevet US-A-4.598.593.

Une technique différente appliquée également dans l'industrie charbonnière et décrite par exemple dans le brevet US-A-4.506.541 permet de mesurer la densité de particules circulant dans des conduites. Elle consiste essentiellement à émettre dans le conduit un faisceau d'électrons au moyen d'une source isotopique et à mesurer au moyen d'un capteur, l'énergie qui est diffractée par les particules.

Une autre techniquc connue pour mesurer la vitesse de particules mobiles en circulation telles que des cellules sanguines, est décrite par exemple dans le brevet US-A-4.596.254. Elle consiste essentiellement à mesurer le décalage de fréquence dû à l'effet Doppler qui affecte des ondes lumineuses ayant traversé le flux de particules et à déterminer leur vitesse par auto-corrélation.

Le brevet FR-A-2 530 015, décrit un dispositif comportant un conduit où circule un courant de gaz chargé de particules, une large entrée de gaz latérale, et deux étranglements de la part et d'autre de cette entréc. Ce dispositif permet de mesurer un débit massiquc de particules à partir de deux différences de pression mesurées de part et d'autre de chaque étranglement.

Par le document décrit dans Soviet Inventions Illustrated, section E1, week 8417, 06.06.84, Derwent Publications Ltd. London GB & SU-A-1.030.655, on connaît un système qui mesure des caractéristiques de courants de fluide circulant dans un conduit en exploitant la différence de pression entre la pression régnant dans le conduit au voisinage dc son extrémité et la pression atmosphérique, ainsi que le débit d'une injection périphérique de fluide à son extrémité.

Le procédé selon l'invention a pour objet le contrôle d'un flux de particules circulant dans un conduit. Il est défini dans la revendication 1.

Le procédé comporte par exemple la mesure desdits signaux pour déterminer la présence de particules en circulation dans le conduit.

Dans le cas où les particules circulant dans le conduit ont des sections voisines les unes des autres, le traitement des signaux représentatifs des variations de pression comporte une auto-corrélation desdits signaux de façon à en déduire la vitesse de passage des particules devant l'orifice.

Suivant un autre mode de réalisation le procédé comporte par exemple l'injection d'un fluide à débit déterminé dans deux tubes débouchant dans le conduit par deux orifices à deux emplacements distincts le long de celui-ci, la section de chaque tube, au moins au niveau de son orifice, ayant une section en relation avec celle des particules en circulation;
- la mesure séparée des signaux représentatifs des variations au cours du temps de la pression du fluide dans chaque tube résultant du passage devant les orifices des particules en circulation; et
- une mise en corrélation des signaux correspondant respectivement aux deux tubes, de manière à déterminer la vitesse et la section des particules.

Le procédé selon l'invention est bien adapté pour le contrôle d'écoulements de particules dans de nombreuses unités industrielles chimiques notamment, où l'on traite souvent des milieux corrosifs dans des conditions très variables de température et de pression. Un ou plusieurs tubes en acier inoxydable, alimentés au besoin en un fluide, généralement le même que celui qui circule dans l'unité chimique concernée, associés à des moyens de mesure de pression absolue ou différentielle, suffisent pour engendrer des signaux exploitables pour surveiller un écoulement et connaître certaines de ses caractéristiques. Le coût d'un tel dispositif est relativement faible.

Le dispositif selon l'invention est défini dans la revendication 6.

Quand les particules ont sensiblement même section, les moyens de traitement sont adaptés à effectuer une auto-corrélation desdits signaux de façon à en déduire la vitesse de passage des particules devant ledit orifice.

Suivant un autre mode de réalisation le dispositif comporte deux tubes débouchant dans le conduit par deux orifices à deux emplacements distincts le long de celui-ci, la section de chaque tube au moins au niveau de son orifice, ayant une section du même ordre de grandeur que celle des particules en circulation et deux sources de fluide à débit déterminé alimentant respectivement les deux tubes, des moyens pour mesurer séparément des signaux représentatifs des variations au cours du temps de la pression du fluide dans chaque tube résultant du passage dans le conduit desdites particules, devant les orifices respectifs des deux tubes, et des moyens de comparaison des signaux correspondant respectivement aux deux tubes.

Les moyens de comparaison sont adaptés par exemple à effectuer une corrélation des signaux correspondant respectivement aux deux tubes de manière à déterminer la vitesse et la section des particules en circulation.

D'autres caractéristiques et avantages du procédé et du dispositif selon l'invention, apparaîtront mieux à la lecture de la description ci-après de modes de réalisation décrits à titre d'exemples non limitatifs, en se référant aux dessins annexés où :
- la Fig.1 montre un premier mode de réalisation du dispositif selon l'invention avec un seul tube d'injection;
- la Fig.2 montre un deuxième mode de réalisation de l'invention avec deux tubes d'injection;
- la Fig.3 montre un mode de réalisation des tubes d'injection du fluide; et
- la Fig.4 montre un exemple de trace représentative des variations de la pression consécutives au passage de particules, que l'on peut obtenir avec le dispositif selon l'invention;
- les Fig.5 à 7 montrent plusieurs courbes d'auto-corrélation obtenues à partir de courbes de variations;

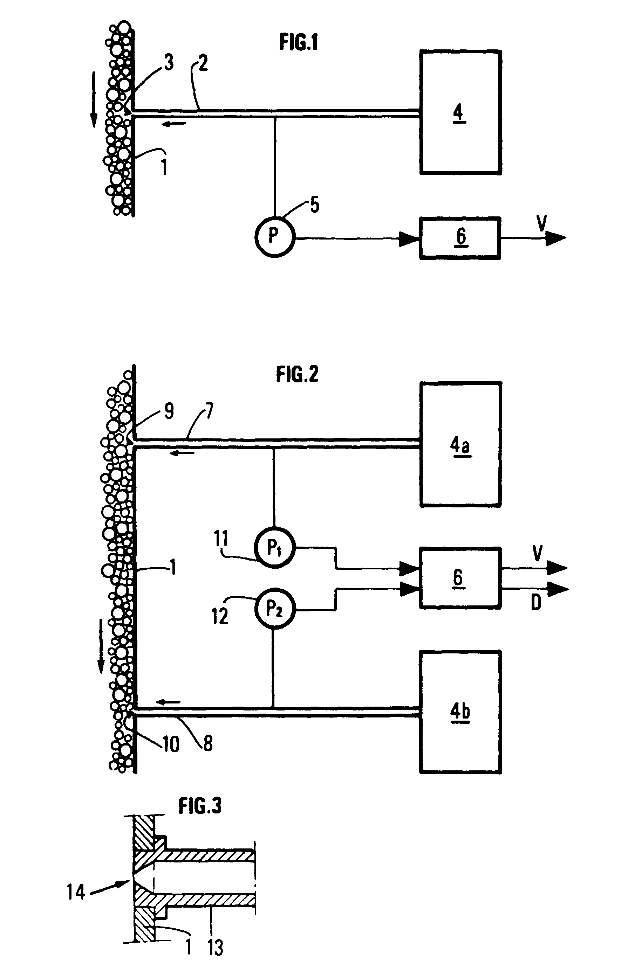

Le procédé selon l'invention consiste essentiellement à mesurer les variations de la pression d'un fluide tel qu'un gaz, occasionnées par des particules en mouvement venant faire obstacle au libre écoulement de ce gaz. Les particules dont il s'agit de mesurer la vitesse par exemple, sont en mouvement dans un conduit 1 (Fig.1, 2). Il peut s'agir par exemple de billes ou granulés servant de support à un catalyseur et qui se déplacent sous l'effet de la gravité dans un conduit de raccordement entre des réacteurs chimiques, ou dans une enceinte quelconque.

Suivant le premier mode de réalisation (Fig.1), le dispositif comporte un tube 2 débouchant dans le conduit 1 à une première extrémité par un orifice 3. De préférence, le tube 2 effleure la paroi du conduit 1 de manière à ne pas perturber l'écoulement des particules. Ce tube 2 est alimenté en fluide sous pression à son extrémité opposée par une source de fluide à débit déterminé 4, constant de préférence. Un capteur de pression 5 est disposé de manière à mesurer en permanence la pression du fluide circulant dans le tube 2. Il engendre un signal indicatif de la pression mesurée qui est appliqué à un calculateur 6 tel qu'un micro-ordinateur programmable d'un type connu muni d'une carte d'interface pour l'acquisition des signaux de mesure de pression.

La section de tube 2 est choisie du même ordre de grandeur que la section des particules circulant dans le conduit et de préférence inférieure de façon à obtenir des variations franches de la pression du fluide. On utilise par exemple un tube dont la section est comprise entre 1/3 et 1/10 de celle des particules.

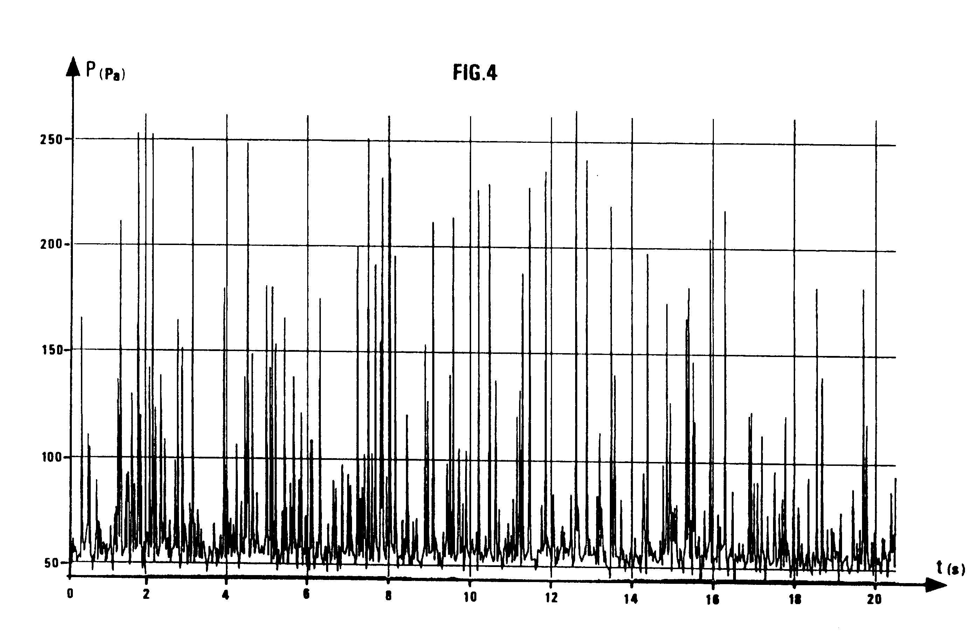

Les particules qui se déplacent dans le conduit 1 et passent devant l'orifice 3, modifient la pression instantanée mesurée par le capteur 5. La pression mesurée (Fig.4) présente des pics dont l'amplitude dépend de la proximité des billes par rapport à l'orifice. La largeur des pics est proportionnelle à D/V où D est la section des particules et V leur vitesse moyenne.

Dans le cas où les particules circulant dans le conduit 1 ont sensiblement même section D, le procédé selon l'invention permet de déterminer le débit en effectuant une auto-corrélation de la fonction P(t) et en mesurant la largeur à mi-hauteur exprimée en temps du pic principal de corrélation obtenue.

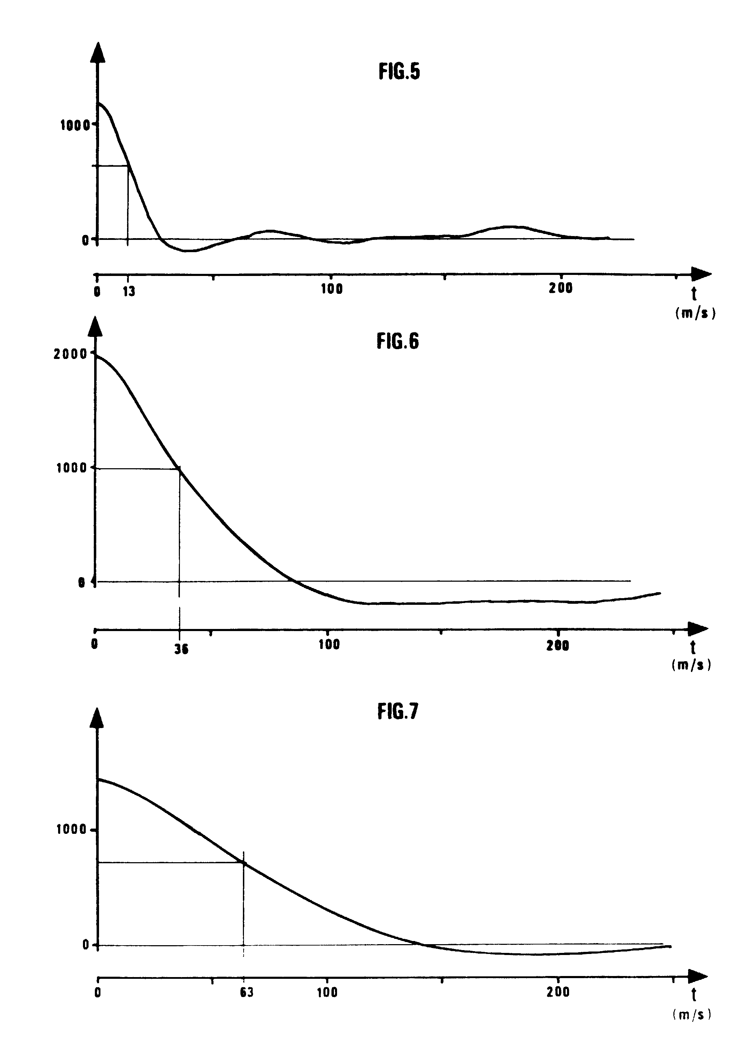

On a vérifié expérimentalement que la largeur (en temps) du pic principal de la fonction d'auto-corrélation à mi-hauteur par exemple, était inversement proportionnelle à la vitesse des particules, sensiblement comme le montrent les courbes expérimentales des Fig.5 à 7. Elles ont été établies en auto-corrélant des variations de pression mesurées dans le tube 2 quand on fait passer devant son orifice de sortie 3 des particules de section connue et présentant des vitesses V1, V2, V3 respectivement de 3,846.10⁻² m/s, 1,44.10⁻² m/s et 0,847.10⁻² m/s. On vérifie que dans les trois cas expérimentés, le produit de la durée mesurée dt1, dt2, dt3 de chaque pic principal (respectivement 13 ms, 36 ms et 63 ms) par la vitesse correspondante, est sensiblement égal dans tous les cas à un facteur k de l'ordre de 0,5. A partir de cette valeur commune du coefficient k que l'on établit par calibration préalable, on peut donc par la mesure de la largeur à mi-hauteur de chaque pic, déterminer la vitesse moyenne des particules durant un intervalle de temps de mesure déterminé de la pression.

Suivant le mode de réalisation de la Fig.2, le dispositif comporte deux tubes fins 7, 8 dont une première extrémité débouche dans le conduit 1 par deux orifices respectivement 9, 10 à distance l'un de l'autre. Pareillement, ces deux tubes sont alimentés en fluide chacun par une source distincte (4A, 4B) à débit déterminé de préférence constant. Deux capteurs de pression 11, 12 mesurent les variations de pression respectivement dans les deux tubes 7, 8 causées par les particules qui passent respectivement devant les orifices 9, 10. Les signaux produits par les deux capteurs sont acquis parallèlement par le calculateur 6 par l'intermédiaire d'un multiplexeur (non représenté).

Les tubes 2, 7, 8 à section constante proportionnée à la section des particules peuvent être remplacés dans la pratique (Fig.3) par des tubes 13 de section plus grande qui se terminent par une buse 14 et débouchent dans le conduit 1 par un orifice dont la section comme précédemment est adaptée à celle des particules.

Avec l'agencement décrit, le procédé selon l'invention permet par intercorrélation des fonctions P1(t) et P2(t) représentatives des variations respectives des pressions dans les deux tubes fins 7, 8, de déterminer deux paramètres différents. La fonction d'intercorrélation. on le vérifie, présente un pic principal décalé d'un intervalle de temps Δt par rapport à l'origine des temps, qui est égal au temps mis par les particules pour parcourir la distance entre les deux orifices 9, 10. La mesure de cet intervalle de temps Δt permet, connaissant la distance entre les deux orifices 9, 10, de déterminer le premier paramètre i.e la vitesse moyenne des particules pendant l'intervalle de temps où les traces P1(t) et P2(t) sont acquises. La vitesse moyenne V des particules étant connue par mesure du décalage Δt, la mesure de la largeur du pic principal de la fonction d'intercorrélation permet d'en déduire, la section D des particules circulant dans le conduit 1.

On ne sortirait pas du cadre de l'invention en remplaçant chaque source de fluide à débit déterminé par des moyens pour délivrer un fluide à pression sensiblement constante et en mesurant les variations de débit de fluide dans chaque tube fin résultant du passage des particules devant leur orifice 3, 9, 10. Ces moyens pour fournir un fluide à pression constante dans ce cas peuvent être par exemple un réservoir à pression élevée relié à chaque tube par un détendeur régulant la pression en aval. Ce procédé alternatif est cependant plus difficile à mettre en oeuvre dans la pratique.

## Revendications

1. Procédé pour la mesure d'un flux de particules circulant dans un conduit (1), comportant :
- l'injection d'un fluide à débit déterminé dans au moins un tube (2) débouchant dans le conduit par un orifice (3), le tube, au moins au niveau de l'orifice, ayant une section du même ordre de grandeur que celle des particules en circulation;
- la mesure de variations au cours du temps de la pression du fluide dans le tube, ces variations de pression résultant du passage desdites particules devant l'orifice du tube; et
- le traitement des signaux représentant les dites variations de pression pour en déduire par corrélation au moins la vitesse des particules passant devant l'orifice.

2. Procédé selon la revendication 1, caractérisé en ce que lesdites variations de pression sont celles de la différence de pression régnant entre le tube et le conduit.

3. Procédé selon l'une des revendications précédentes, caractérisé en ce que l'on mesure lesdits signaux pour déterminer la présence de particules en circulation dans le conduit.

4. Procédé selon la revendication 3, caractérisé en ce que les particules circulant dans le conduit ayant des sections voisines les unes des autres, le traitement des signaux représentatifs des variations de pression comporte une auto-corrélation desdits signaux de façon à en déduire la vitesse de passage des particules devant ledit orifice (3).

5. Procédé selon l'une des revendications 1 à 3, caractérisé en ce qu'il comporte l'injection d'un fluide à débit déterminé dans deux tubes (7, 8) débouchant dans le conduit par deux orifices (9, 10) à deux emplacements distincts le long de celui-ci, la section de chaque tube, au moins au niveau de son orifice, ayant une section du même ordre de grandeur que celle des particules en circulation;
- la mesure séparée des variations au cours du temps de la pression du fluide dans chaque tube résultant du passage devant les orifices des particules en circulation; et
- une mise en corrélation des variations de pression correspondant respectivement aux deux tubes (7, 8) , de manière à déterminer la vitesse et la section des particules.

6. Dispositif pour la mesure d'un flux de particules circulant dans un conduit, qui met en oeuvre le procédé selon l'une des revendications précédentes, comportant au moins un tube (2) débouchant dans le conduit par un orifice (3), ce tube au moins au niveau de l'orifice, ayant une section du même ordre de grandeur que celle des particules en circulation, au moins une source de fluide sous pression (4) à débit déterminé communiquant avec ledit tube (2), des moyens de mesure (5) des variations de pression dans le tube causées par le passage de particules devant son orifice, et des moyens de traitement (6) qui utilisent la mesure de pression afin de déterminer par corrélation au moins la vitesse des particules passant devant l'orifice.

7. Dispositif selon la revendication 6, caractérisé en ce que, les particules ayant sensiblement même section, les moyens de traitement (6) sont adaptés à effectuer une auto-corrélation desdits signaux de façon à en déduire la vitesse de passage des particules devant ledit orifice.

8. Dispositif selon la revendication 6, caractérisé en ce qu'il comporte deux tubes (7, 8) débouchant dans le conduit par deux orifices (9, 10) à deux emplacements distincts le long de celui-ci, chaque tube au moins au niveau de son orifice, ayant une section du même ordre de grandeur que celle des particules en circulation et deux sources (4A, 4B) de fluide à débit déterminé alimentant respectivement les deux tubes;
- des moyens (11, 12) pour mesurer séparément des signaux représentatifs des variations au cours du temps de la pression du fluide dans chaque tube résultant du passage dans le conduit desdites particules, devant les orifices respectifs des deux tubes; et
- des moyens (6) de comparaison des signaux correspondant respectivement aux deux tubes.

9. Dispositif selon la revendication 6, caractérisé en ce que les moyens de comparaison (6) sont adaptés à effectuer une corrélation des signaux correspondant respectivement aux deux tubes de manière à déterminer la vitesse et la section des particules en circulation.

## Patentansprüche

1. Verfahren zum Messen eines Stroms von in einer Leitung (1) zirkulierenden Partikeln, umfassend
- die Injektion eines Fluids bei bestimmtem Durchsatz in wenigstens ein Rohr (2), das über eine öffnung (3) in die Leitung mündet, wobei das Rohr wenigstens in Höhe der Öffnung einen Querschnitt von der gleichen Größenordnung wie der der in Zirkulation befindlichen Partikel hat;
- Messung von Veränderungen des Drucks des Fluids im Rohr über die Zeit, wobei diese Druckveränderungen aus dem Vorbeigang dieser Partikel vor der öffnung des Rohres resultieren; und
- Verarbeitung der Signale, welche diese Druckveränderungen darstellen, um hieraus durch Korrelation wenigstens die Geschwindigkeit der Partikel, die vor der öffnung vorbeiströmen, abzuleiten.

2. Verfahren nach Anspruch 1, dadurch gekennzeichnet, daß diese Druckveränderungen die der zwischen Rohr und Leitung herrschenden Druckdifferenz sind.

3. Verfahren nach einem der vorhergehenden Ansprüche, dadurch gekennzeichnet, daß man diese Signale, um das Vorhandensein von in der Leitung in Zirkulation befindlichen Partikeln mitzubestimmen, mißt.

4. Verfahren nach Anspruch 3, dadurch gekennzeichnet, daß die in der Leitung zirkulierenden Partikel einander benachbarte Abmessungen haben, die Verarbeitung der Druckveränderungen repräsentierenden Signale eine Autokorrelation dieser Signale derart umfaßt, daß hieraus die Durchgangsgeschwindigkeit der Partikel vor dieser Öffnung (3) abgeleitet wird.

5. Verfahren nach einem der Ansprüche 1 bis 3, dadurch gekennzeichnet, daß es die Injektion eines Fluids mit bestimmtem Durchsatz in zwei Rohre (7, 8) umfaßt, welche in die Leitung über zwei Öffnungen (9, 10) an zwei längs ihrer unterschiedlichen Orten mündet, wobei der Querschnitt jedes Rohres, wenigstens in Höhe seiner Öffnung, einen Querschnitt in derselben Größenordnung wie der der in Zirkulation befindlichen Partikel hat;
- getrennte Messung der Veränderungen des Fluiddrucks in jedem Rohr über die Zeit, was aus dem Durchgang vor den Öffnungen der in Zirkulation befindlichen Partikel resultiert; und
- ein In-Korrelation-Setzen der Druckveränderungen jeweils entsprechend den beiden Rohren (7, 8), derart, daß die Geschwindigkeit und der Querschnitt der Partikel bestimmt werden.

6. Vorrichtung zum Messen des Stroms von in einer Leitung zirkulierenden Partikeln, zur Durchführung des Verfahrens nach einem der vorhergehenden Ansprüche, wenigstens ein Rohr (2) umfassend, das in die Leitung über eine Öffnung (3) mündet, wobei das Rohr wenigstens in Höhe der Öffnung einen Querschnitt in der gleichen Größenordnung wie der der in Zirkulation befindlichen Partikel hat, wenigstens eine Fluidquelle unter Druck (4) mit bestimmtem Durchsatz mit diesem Rohr (2) in Verbindung steht, Meßmittel (5) der Druckveränderungen in dem Rohr, hervorgerufen durch den Vorbeigang der Partikel vor seiner Öffnung sowie Verarbeitungsmittel (6), welche die Messung des Drucks außen, um durch Korrelation wenigstens die Geschwindigkeit der vor der Öffnung vorbeiströmenden Partikel zu bestimmen, verwenden.

7. Vorrichtung nach Anspruch 6, dadurch gekennzeichnet, daß die Partikel im wesentlichen den gleichen Querschnitt haben, die Verarbeitungsmittel (6) so ausgelegt sind, daß sie eine Autokorrelation dieser Signale derart vornehmen, daß hieraus die Durchgangsgeschwindigkeit der Partikel vor dieser Öffnung abgeleitet wird.

8. Vorrichtung nach Anspruch 6, dadurch gekennzeichnet, daß sie zwei Rohre (7, 8) umfaßt, die in die Leitung über zwei öffnungen (9, 10) an zwei, längs dieser, unterschiedlichen Orten münden, wobei jedes Rohr wenigstens in Höhe seiner Öffnung einen Querschnitt gleicher Größenordnung wie der der in Zirkulation befindlichen Partikel hat und zwei Quellen (4A, 4B) für Fluid mit bestimmtem Durchsatz jeweils die beiden Rohre speisen;
- Mittel (11, 12), um getrennt Signale zu messen, die repräsentativ für die Veränderungen über die Zeit des Drucks des Fluids in jedem Rohr aufgrund des Durchlaufs oder Vorbeilaufs in dieser Leitung dieser Partikel vor den jeweiligen Öffnungen der beiden Rohre sind; und
- Mittel (6) zum Vergleich der Signale, die jeweils den beiden Rohren entsprechen.

9. Vorrichtung nach Anspruch 6, dadurch gekennzeichnet, daß die Vergleichsmittel (6) so ausgelegt sind, daß sie eine Korrelation der Signale jeweils entsprechend den beiden Rohren derart vornehmen, daß die Geschwindigkeit und der Querschnitt der in Zirkulation befindlichen Partikel bestimmt wird.

## Claims

1. A method of measuring a flow of particles circulating in a pipe (1), which consists in
- injecting a fluid at a given flow rate into at least one tube (2) opening into the pipe via an orifice (3), the tube having a section of the same size as that of the circulating particles, at least on a level with the orifice;
- measuring variations over time in the pressure of the fluid in the tube, the pressure variations resulting from the flow of said particles past the orifice of the tube; and
- processing the signals representing said pressure variations in order to derive therefrom by correlation at least the velocity of the particles as they pass in front of the orifice.

2. A method as claimed in claim 1, characterised in that said pressure variations are those of the pressure difference prevailing between the tube and the pipe.

3. A method as claimed in one of the preceding claims, characterised in that said signals are measured in order to determine the presence of particles circulating in the pipe.

4. A method as claimed in claim 3, characterised in that if the particles circulating in the pipe are of similar sections to one another, the signals representing pressure variations will be processed by incorporating an auto-correlation of said signals in order to derive therefrom the velocity of flow of the particles as they pass said orifice (3).

5. A method as claimed in one of claims 1 to 3, characterised in that it consists in injecting a fluid at a given flow rate into two tubes (7, 8) opening into the pipe via two orifices (9, 10) at two separate locations along it, the section of each tube, at least on a level with its orifice, having a section of the same size as that of the circulating particles;
- measuring separately the variations over time in the pressure of the fluid in each tube resulting from the flow of circulating particles past the orifices; and
- correlating the pressure variations corresponding respectively to the two tubes (7, 8) so as to determine the velocity and section of the particles.

6. A device for measuring a flow of particles circulating in a pipe, applying the method as claimed in one of the preceding claims, comprising at least one tube (2) opening into the pipe via an orifice (3), this tube being of a section that is the same size as that of the circulating particles, at least on a level with the orifice, at least one source of compressed fluid (4) having a given flow rate communicating with said tube (2), means for measuring (5) the variations in pressure in the tube caused by the flow of particles past its orifice and processing means (6) which use the pressure measurement as a means of determining, by correlation, at least the velocity of the particles flowing past the orifice.

7. A device as claimed in claim 6, characterised in that since the particles are of substantially the same section, the processing means (6) can be programmed to apply an auto-correlation of said signals in order to derive therefrom the velocity of the particles as they flow past said orifice.

8. A device as claimed in claim 6, characterised in that it has two tubes (7, 8) opening into the pipe via two orifices (9, 10) at two separate locations along it, each tube being of a section of the same size as that of the circulating particles, at least on a level with its orifice, and two sources (4A, 4B) delivering fluid to the two tubes respectively at a given flow rate;
- means (11, 12) for measuring separately the signals representing variations over time in the pressure of the fluid in each tube resulting from the flow of said particles in the pipe past the respective orifices of the two tubes; and
- means (6) for comparing the signals corresponding respectively to the two tubes.

9. A device as claimed in claim 6, characterised in that the comparison means (6) are set up to apply a correlation of the signals corresponding respectively to the two tubes in order to determine the velocity and section of the circulating particles.
